**Europäisches Patentamt**

(19) **European Patent Office**

**Office européen des brevets**

(11) Numéro de publication : **0 223 705 B1**

(12) **FASCICULE DE BREVET EUROPEEN**

(45) Date de publication du fascicule du brevet :
27.03.91 Bulletin 91/13

(51) Int. Cl.$^5$ : **C12G 3/02, C12G 3/08**

(21) Numéro de dépôt : **86402518.4**

(22) Date de dépôt : **13.11.86**

(54) **Boissons aromatiques à faibles teneurs en alcool et en sucre, obtenues par fermentation à partir de moût ou jus de raisin, procédé microbiologique de préparation desdites boissons.**

(30) Priorité : **14.11.85 FR 8516850**

(43) Date de publication de la demande :
**27.05.87 Bulletin 87/22**

(45) Mention de la délivrance du brevet :
**27.03.91 Bulletin 91/13**

(84) Etats contractants désignés :
**AT BE CH DE ES FR GB GR IT LI LU NL SE**

(56) Documents cités :
**EP-A- 0 194 043**
**FR-A- 1 481 904**
**FR-A- 2 546 906**
**US-A- 3 389 998**
**CHEMICAL ABSTRACTS, vol. 101, no. 13, 24 septembre 1984, pages 497,498, résumé no. 108886m, Columbus, Ohio, US; A. JOYEUX et al.: "Metabolism of acetic acid bacteria in grape must. Effects on alcoholic and malo-lactic fermentation"**
**CHEMICAL ABSTRACTS, vol. 82, no. 17, 28 avril 1975, page 375, résumé no. 110291w, Columbus, Ohio, US; L.P. McCLOSKEY: "Gluconic acid in California wines"**

(73) Titulaire : **PERNOD-RICARD**
**142, Boulevard Haussmann**
**F-75008 Paris (FR)**

(72) Inventeur : **Boldron, Jean-Noel**
**5, rue de Madrid**
**F-33000 Bordeaux (FR)**
Inventeur : **Caruana, Christian**
**Résidence Monségur Bat. C Rue Jean Racine**
**F-33400 Talence (FR)**
Inventeur : **Lafon-Lafourcade, Suzanne**
**15, Cours de la Somme**
**F-33000 Bordeaux (FR)**
Inventeur : **Ribereau-Gayon, Pascal**
**1, Place Jean Jaurès**
**F-33000 Bordeaux (FR)**

(74) Mandataire : **Gillard, Marie-Louise et al**
**Cabinet Beau de Loménie 55, Rue d'Amsterdam**
**F-75008 Paris (FR)**

## Description

La présente invention concerne des boissons aromatiques à faibles teneurs en alcool et en sucre obtenues à partir de moût ou jus de raisin par fermentation. Elle a également pour objet un procédé de préparation microbiologique desdites boissons.

Les changements intervenus dans les goûts et les besoins des consommateurs incitent ceux-ci à rechercher des boissons moins caloriques que les boissons traditionnelles, mais cependant flatteuses au nez et au palais. Y parvenir à partir du moût de raisin est difficile. Le substratum est peu aromatique ; abandonné à l'air dans des conditions septiques, il fermente "spontanément" et se transforme en vin. Les procédés proposés jusqu'ici pour diminuer sa valeur calorique reposent sur des manipulations physico-chimiques, élimination de l'alcool (light wine), dilution du vin avec aromatisation (wine cooler), fermentation partielle des moûts dilués ou extraits de raisins immatures. Il est pourtant tout à fait souhaitable de disposer d'une boisson aromatique qui, tout en conservant une couleur et un goût analogues à ceux du vin, aurait un degré alcoolique inférieur à celui du vin. Il est également souhaitable de disposer d'un procédé naturel (biologique) permettant la préparation d'une telle boisson. Ce sont là les buts de la présente invention.

Un procédé de préparation d'un vin à faible teneur en alcool est décrit dans la demande EP-A-0 194 043 publiée le 10 septembre 1986 et bénéficiant d'une priorité DK du 8 février 1985. Ledit procédé consiste en une oxydation enzymatique – intervention d'une glucose oxydase – suivie d'une fermentation de jus de raisin.

L'objet de la présente invention est un liquide, analogue au vin quant à son aspect et à son goût, mais de degré alcoolique et de teneur en sucre inférieurs à ceux du vin. Il diffère par sa nature et son procédé d'obtention du vin décrit dans ladite demande EP-A-0 194 043.

Le vin de l'invention est obtenu par fermentation à partir du moût ou de jus de raisin et est caractérisé en ce qu'il contient :
- de 3 à 7 % en volume d'alcool, et
- de 5 à 15 g/l d'acide gluconique.

Sa teneur en sucre est généralement comprise entre 0 et 90 g/l, de préférence entre 10 et 30 g/l.

Un autre objet de l'invention est donc un procédé microbiologique pour la préparation desdites boissons aromatiques à faibles teneurs en alcool et en sucre. Ce procédé repose sur la mise en oeuvre de deux processus fermentaires, différents de ceux qui concourent à la préparation du vin, mais cependant développés par des microorganismes présents dans les moûts et les vins.

Il consiste en ce que :
- dans une première étape, on soumet le moût ou le jus de raisin à une fermentation à l'aide d'un microorganisme tel que Gluconobacter oxydans jusqu'à ce que le mélange obtenu contienne entre 5 et 15 g/l d'acide gluconique ;
- puis, après élimination dudit Gluconobacter oxydans, on soumet la mixture obtenue à une fermentation à l'aide d'un microorganisme habituellement utilisé dans la vinification (comme par exemple et de préférence le Saccharomyces cerevesiae), jusqu'à ce que le mélange contienne de 3 à 7 % en volume d'alcool ;
- puis, la fermentation est stoppée, ou s'arrête naturellement, et le liquide est éventuellement soumis à pasteurisation en vue de le stabiliser dans le temps.

Ainsi, dans la première étape, on va soumettre le moût ou le jus de raisin à une fermentation dans laquelle une partie du glucose contenu dans le matériau de départ sera transformée en acide gluconique.

On pourra utiliser les divers microorganismes connus pour réaliser une telle transformation mais les essais ont démontré que le Gluconobacter oxydans était le microorganisme préféré car on a des raisons de penser que, outre la transformation du glucose en acide gluconique, le Gluconobacter oxydans produit, au cours de la fermentation, certains métabolites qui modifient le milieu et modifient également la cinétique (éventuellement le mécanisme) d'action du microorganisme (par exemple Saccharomyces cerevisae) utilisé dans la deuxième étape.

Selon l'art antérieur, et notamment une publication dans "Science des Aliments", 1984, 4(2), 247-55, on connaît l'incidence néfaste du développement de Gluconobacter oxydans sur la fermentation alcoolique. Selon l'invention, on a exploité de façon judicieuse dans un procédé d'obtention d'une boisson à faible titre alcoométrique la propriété de Gluconobacter oxydans de modifier la composition du moût ou jus de raisin.

Il est possible de faire agir, dans la première étape dudit procédé le microorganisme (de préférence Gluconobacter oxydans) directement sur du moût de raisin (jus très chargé en particules insolubles) ou bien sur un jus de raisin (produit consommable). Les produits obtenus dans l'un et l'autre cas auront des goûts légèrement différents mais ils sont considérés par les spécialistes comme acceptables l'un et l'autre. Dans le cas où l'on utilise un jus de raisin, ce dernier peut avoir été, après pressage, clarifié, concentré, conservé dans des conditions connues (évitant toute fermentation) puis éventuellement dilué.

Les conditions de fermentation de cette première étape sont tout à fait connues : par exemple, pH compris entre 4 et 6, température de l'ordre de 25°C. On utilisera de préférence comme produit de départ un moût ou jus de raisin éventuellement dilué avec de l'eau et contenant 70 à 150 g de sucre par litre et la fermentation transformera de 5 à 20% environ de ce sucre en acide gluconique.

A la fin de la première étape, il conviendra d'arrêter la fermentation en particulier par élimination de la bactérie utilisée au moyen d'une centrifugation ou de toute autre méthode convenable.

Le liquide obtenu est alors soumis à une fermentation tout à fait analogue à celle réalisée dans les vinifications ; en effet, cette deuxième fermentation a pour objet de transformer tout ou partie du sucre présent dans le liquide en alcool. Comme on vise la préparation d'une boisson contenant de 3 à 7 % en volume d'alcool, la seconde fermentation assurera la transformation d'environ 51 à 120 g de sucre présent en alcool ; c'est dire qu'à la fin de cette seconde fermentation (ou plus précisément lorsque ladite fermentation aura été arrêtée du fait de l'obtention d'un degré d'alcool suffisant) il subsistera en général dans le liquide une quantité de sucre comprise entre 0 et 90 g environ. On a trouvé que le meilleur équilibre, en ce qui concerne l'aspect et le goût du liquide obtenu, est réalisé lorsque le liquide contient de 10 à 30 g/l de sucre.

Avantageusement, le microorganisme utilisé pour cette seconde fermentation, classique est le Saccharomyces cerevisiae.

Au cours de cette seconde étape du procédé selon l'invention -fermentation conduite à l'aide d'un microorganisme habituellement utilisé dans la vinification- on peut éventuellement ajouter au mélange de l'acide hexanoïque et/ou décanoïque et/ou octanoïque, à une dose de l'ordre de 4 mg/l chacun. Le rôle de ces acides a été décrit dans la demande de brevet français 2 456 906. Ils permettent de réduire l'utilisation de $SO_2$, protègent le produit contre une fermentation et agissent comme précurseurs d'esters éthyliques aromatiques.

Gluconobacter oxydans et Saccharomyces cerevisiae sont des microorganismes connus et accessibles.

Le procédé selon l'invention comporte éventuellement une troisième étape de pasteurisation.

L'invention est illustrée par l'exemple non limitatif suivant :

Le substratum est un moût concentré extrait de raisins rouges de cépage Carignan. On amène la teneur initiale en sucre à 104 g/l par dilution et le pH à 5 par addition de soude. On le répartit en erlens de deux litres contenant 1,5 l de moût et on stérilise 5 mn à 105°C.

Le moût, inoculé avec $10^6$ cells/ml de G. oxydans G50, en culture depuis trois jours dans le même milieu, est mis à incuber à 25°C. Après 4 jours, la population est en phase de déclin ; le moût titre : sucre 90 g/l (glucose 40,1 g/l ; fructose 49,8 g/l) ; acide gluconique 10 g/l ; pH 3,4. Il est centrifugé 10 mn à 7000 tours/mn pour éliminer G. oxydans. Le surnageant, recueilli dans des béchers de deux litres remplis de 1,8 l, est ensemencé avec $10^6$ cells/ml de S. cereviciae CC85 (culture de trois jours dans du moût de raisin) et mis à incuber à 19°C sous légère pression de gaz carbonique (Système Gas Pak).

Au troisième jour, 50 g/l de sucre sont fermentés. On ajoute, par litre : acide hexanoïque 4 mg ; acide décanoïque 4 mg. Après six jours, les populations de levure sont en phase de déclin et 70 g/l de sucre sont fermentés. On arrête la fermentation alcoolique par élimination des levures au moyen d'une double centrifugation.

Les caractéristiques analytiques de la boisson fermentée sont les suivantes : sucre 20 g/l ; éthanol % vol. 4,01 ;

acidité volatile 0,37 g/l ; acidité totale 4,07 g/l ; glycérol 1,67 g/l ; pH 4,07. Les teneurs en les principales substances volatiles ont été déterminées par chromatographie en phase aqueuse.

Des souches spécifiques -G. oxydans G 50 et Saccharomyces cerevisiae CC85- ont été utilisées. D'autres souches de ces espèces ou d'espèces à action analogues conviennent également.

A la dégustation, la boisson présente :
– une couleur soutenue et chaude,
– un arôme fruité, agréable,
– en bouche, des qualités de souplesse et d'équilibre.


**Revendications**

**Revendications pour les Etats contractants BE, ES, GR, LU, NL, SE**

1. Boissons aromatiques obtenues par fermentation à partir de moût ou jus de raisin, qui présentent un goût et un aspect analogues à ceux du vin, caractérisées en ce qu'elles contiennent :
– de 3 à 7 % en volume d'alcool, et
– de 5 à 15 g/l d'acide gluconique.

2. Boissons selon la revendication 1, caractérisées en ce qu'elles comportent de 10 à 30 g/l de sucre.

3. Procédé pour la préparation, à partir de moût ou jus de raisin, d'une boisson aromatique à faibles teneurs en alcool et en sucre, caractérisé en ce qu'il consiste :
– dans une première étape, à soumettre le moût ou le jus de raisin à une fermentation à l'aide de Gluconobacter oxydans jusqu'à ce que le mélange obtenu contienne entre 5 et 15 g/l d'acide gluconique,
– puis, après élimination dudit Gluconobacter oxydans, à soumettre la mixture obtenue à une fermentation à l'aide d'un microorganisme habituellement utilisé dans la vinification, jusqu'à ce que le mélange contienne de 3 à 7 % en volume d'alcool,

– puis, là fermentation étant stoppée ou s'arrêtant naturellement, à éventuellement soumettre le liquide à pasteurisation en vue de le stabiliser dans le temps.

4. Procédé selon la revendication 3, caractérisé en ce que le microorganisme, habituellement utilisé dans la vinification, intervenant dans la seconde fermentation est le <u>Saccharomyces cerevisiae</u>.

5. Procédé selon l'une des revendications 3 ou 4, caractérisé en ce qu'il comporte l'addition d'acide hexanoïque et/ou décanoïque et/ou octanoïque à une dose de l'ordre de 4 mg/l chacun au cours de la fermentation conduite à l'aide d'un microorganisme habituellement utilisé dans la vinification.

**Revendications pour les Etats contractants AT, CH, DE, FR, GB, IT, LI**

1. Procédé pour la préparation, à partir de moût ou jus de raisin, d'une boisson aromatique à faibles teneurs en alcool et en sucre, caractérisé en ce qu'il consiste :
– dans une première étape, à soumettre le moût ou le jus de raisin à une fermentation à l'aide de <u>Gluconobacter oxydans</u> jusqu'à ce que le mélange obtenu contienne entre 5 et 15 g/l d'acide gluconique,
– puis, après élimination dudit <u>Gluconobacter oxydans</u>, à soumettre la mixture obtenue à une fermentation à l'aide d'un microorganisme habituellement utilisé dans la vinification, jusqu'à ce que le mélange contienne de 3 à 7 % en volume d'alcool,
– puis, la fermentation étant stoppée ou s'arrêtant naturellement, à éventuellement soumettre le liquide à pasteurisation en vue de le stabiliser dans le temps.

2. Procédé selon la revendication 1, caractérisé en ce que ledit liquide contient de 10 à 30 g/l de sucre.

3. Procédé selon l'une des revendications 1 ou 2, caractérisé en ce que le microorganisme, habituellement utilisé dans la vinification, intervenant dans la seconde fermentation est le <u>Saccharomyces cerevisiae.</u>

4. Procédé selon l'une quelconque des revendications 1 à 3, caractérisé en ce qu'il comporte l'addition d'acide hexanoïque et/ou décanoïque et/ou octanoïque à une dose de l'ordre de 4 mg/l chacun au cours de la fermentation conduite à l'aide d'un microorganisme habituellement utilisé dans la vinification.

**Ansprüche**

**Patentansprüche für die Vertragsstaaten BE, ES, GR, LU, NL, SE :**

1. Aromatische Getränke, die durch Vergärung von Traubenmost oder -saft erhalten sind und einen Geschmack und ein Aussehen wie Wein haben, dadurch gekennzeichnet, daß sie enthalten :
– 3 bis 7 Vol.% Alkohol und
– 5 bis 15 g/l Gluconsäure.

2. Getränke nach Anspruch 1, dadurch gekennzeichnet, daß sie 10 bis 30 g/l Zucker enthalten.

3. Verfahren zur Herstellung eines aromatischen Getränks mit niedrigem Alkohol- und Zuckergehalt aus Traubenmost oder -saft, dadurch gekennzeichnet, daß es darin besteht, daß :
– der Traubenmost oder -saft in einer ersten Stufe einer Gärung mit Hilfe von <u>Gluconobacter oxydans</u> unterzogen wird, bis die erhaltene Mischung zwischen 5 und 15 g/l Gluconsäure enthält,
– dann, nach vier Entfernung des <u>Gluconobacter oxydans</u>, die erhaltene Mischung einer Gärung mittels eines üblicherweise in der Vinifikation verwendeten Mikroorganismus unterzogen wird, bis diese Mischung 3 bis 7 Vol.% Alkohol enthält,
– dann, nachdem die Gärung gestoppt worden oder natürlich zum Stillstand gekommen ist, die Flüssigkeit gegebenenfalls einer Pasteurisierung zwecks Haltbarmachung für einen Zeitraum unterzogen wird.

4. Verfahren nach Anspruch 3, dadurch gekennzeichnet, daß der üblicherweise in der Vinifikation verwendete und bei der zweiten Gärung zum Einsatz gelangende Mikroorganismus <u>Saccaromyces cerevisiae ist.</u>

5. Verfahren nach einem der Ansprüche 3 oder 4, dadurch gekennzeichnet, daß es die Zugabe von Hexan- und/oder Dekanund/oder Octansäure in einer Menge im Bereich von jeweils 4 mg/l während der mit Hilfe eines überlicherweise in der Vinifikation verwendeten Mikroorganismus durchgführten Gärung umfaßt.

**Patentansprüche für die Vertragsstaaten AT, CH, DE, FR, GB, IT, LI :**

1. Verfahren zur Herstellung eines aromatischen Getränks mit niedrigem Alkohol- und Zuckergehalt aus Traubenmost oder -saft, dadurch gekennzeichnet, daß es darin besteht, daß :
– der Traubenmost oder -saft in einer ersten Stufe einer Gärung mit Hilfe von <u>Gluconobacter oxydans</u> unterzogen wird, bis die erhaltene Mischung zwischen 5 und 15 g/l Gluconsäure enthält,
– dann, nach der Entfernung des <u>Gluconobacter</u>

oxydans, die erhaltene Mischung einer Gärung mittels eines üblicherweise in der Vinifikation verwendeten Mikroorganismus unterzogen wird, bis diese Mischung 3 bis 7 Vol.% Alkohol enthält,

– dann, nachdem die Gärung gestoppt worden oder natürlich zum Stillstand gekommen ist, die Flüssigkeit gegebenenfalls einer Pasteurisierung zwecks Haltbarmachung für einen Zeitraum unterzogen wird.

2. Verfahren nach Anspruch 1, dadurch gekennzeichnet, daß die Flüssigkeit 10 bis 30 g/l Zucker enthält.

3. Verfahren nach einem der Ansprüche 1 oder 2, dadurch gekennzeichnet, daß der üblicherweise in der Vinifikation verwendete und bei der zweiten Gärung zum Einsatz gelangende Mikroorganismus Saccaromyces cerevisiae ist.

4. Verfahren nach einem der Ansprüche 1 bis 3, dadurch gekennzeichnet, daß es die Zugäbe von Hexan- und/oder Dekanund/oder Octansäure in einer Menge im Bereich von jeweils 4 mg/l während der mit Hilfe eines überlicherweise in der Vinifikation verwendeten Mikroorganismus durchgeführten Gärung umfaßt.

## Claims

### Claims for Contracting States BE, ES, GR, LU, NL and SE

1. Aromatic beverages obtained by fermentation of must or grape juice, and presenting a similar taste and appearance to wine,
characterised in that they contain :
   – from 3 to 7 % alcohol by volume, and
   – from 5 to 15 g/l of gluconic acid.

2. Beverages according to claim 1, characterised in that they contain from 10 to 30 g/l of sugar.

3. Process for preparing, from must or grape juice, an aromatic beverage with low alcohol and sugar contents, characterised by comprising the following stages :
   – the must or grape juice is first subjected to fermention with the help of Gluconobacter oxydans until the resulting mixture contains between 5 and 15 g/l of gluconic acid ;
   – next, after elimination of said Gluconobacter oxydans, the resulting mixture is subjected to fermentation with the help of a microorganism normally used in wine-making, until the mixture contains from 3 to 7 % alcohol by volume ;
   – then, the fermentation process having been halted or ceasing naturally, if appropriate the liquid is subjected to pasteurisation with a view to stabilising it over time.

4. Process according to claim 3, characterised in that Saccharomyces cerevisiae is the microorganism normally used in wine-making which is involved in the second fermentation.

5. Process according to one of claims 3 or 4, characterised in that it comprises adding hexanoic and/or decanoic and/or octanoic acid in a dose in the order of 4 mg/l of each, in the course of the fermentation carried out with the help of a microorganism normally used in wine-making.

### Claims for Contracting States AT, CH, DE, FR, GB, IT and LI

1. Process for the preparation, from must or grape juice, of an aromatic beverage with low alcohol and sugar contents, characterised by comprising the following steps :
   – first subjecting the must or the grape juice to fermentation using Gluconobacter oxydans until the resulting mixture contains between 5 and 15 g/l of gluconic acid ;
   – next, after elimination of said Gluconobacter oxydans, subjecting the resulting mixture to fermentation with the help of a microorganism normally used in wine-making, until the mixture contains from 3 to 7 % alcohol by volume ;
   – then, the fermentation process having been halted or ceasing naturally, if appropriate subjecting the liquid to pasteurisation with a view to stabilising it over time.

2. Process according to claim 1, characterised in that said liquid contains from 10 to 30 g/l of sugar.

3. Process according to one of claims 1 or 2, characterised in that Saccharomyces cerevisiae is the microorganism normally used in wine-making which is used in the second fermentation.

4. Process according to any one of claims 1 to 3, characterised in that it comprises adding hexanoic and/or decanoic and/or octanoic acid in a dose in the order of 4 mg/l of each, in the course of the fermentation carried out with the help of a microorganism normally used in winemaking.